Europäisches Patentamt

**European Patent Office**

**Office européen des brevets**

(11) Publication number: **0 088 886**

**B1**

(12) **EUROPEAN PATENT SPECIFICATION**

(45) Date of publication of patent specification: **23.07.86**

(21) Application number: **83101233.1**

(22) Date of filing: **09.02.83**

(51) Int. Cl.⁴: **B 62 D 33/04**

(54) **Openable side panel for load carrying vehicles.**

(30) Priority: **11.03.82 JP 33191/82 u**
**11.03.82 JP 33192/82 u**
**11.03.82 JP 33193/82 u**

(43) Date of publication of application:
**21.09.83 Bulletin 83/38**

(45) Publication of the grant of the patent:
**23.07.86 Bulletin 86/30**

(84) Designated Contracting States:
**CH DE FR GB LI SE**

(56) References cited:
**DE-A-2 601 128**
**DE-A-2 809 375**
**DE-U-7 136 470**
**DE-U-7 409 720**
**GB-A-1 017 836**
**JP-Y-54 002 496**
**US-A-2 711 343**

(73) Proprietor: **Meidai Bussan Kabushiki Kaisha**
**23, Aoki-Cho, 1-Chome**
**Toyota-Shi Aichi-Ken (JP)**

(72) Inventor: **Kobayashi, Nobuo**
**c/o Meidai Bussan K.K. 23, Aoki-Cho 1-Chome**
**Toyota-Shi Aichi-Ken (JP)**

(74) Representative: **Reinhard, Skuhra, Weise**
**Leopoldstrasse 51**
**D-8000 München 40 (DE)**

Courier Press, Leamington Spa, England.

# Description

The present invention relates to an openable side panel mechanism for selectively opening and closing a side panel on the bed or floor of a truck, a trailer, or other load carrying vehicles under the resilient forces applied by compression coil springs.

Attempts have heretofore been made to provide load carrying automobiles such as trucks and trailers having a side cover or panel mounted on the horizontal floor and manually openable laterally of the vehicle for loading and unloading articles. The opening motion of the side panel is assisted by the biasing forces of springs coacting with a toggle mechanism as a relatively large force is required to open the side panel laterally. One such openable side panel device is disclosed by Japanese Utility Model Publication JP—Y—54002496. The disclosed arrangement includes a plurality of springs for biasing the side panel to be kept selectively in open and closed positions under the resilient forces of the springs which are reversible in direction while the side panel is being moved between the open and closed positions by a rope pulled by the operator. The springs employed are in the form of coil springs in order to keep the side panel urged in the closed position and to reduce the force required to open and close the side panel. The known side panel device is disadvantageous in that it is time-consuming and tedious to adjust the resilient forces of the springs individually to a suitable level. With the springs ganged with the toggle mechanism to allow the side panel to be opened and closed with a smaller force and no braking force, the side panel is strongly biased in the open and closed positions and is relatively unstable at a midpoint or dead point between the open and closed positions. The side panel therefore has a tendency to shift toward either the open or the closed position at all times across the dead point, with the result that the side panel cannot be handled by the operator as desired. The side panel is supported on transverse beams mounted centrally on the truck bed at its front and rear ends, respectively. The transverse beams therefore should be heavy and rugged in construction. This requires that the side panel be fastened by the rope to avoid any danger of upward or downward displacement when the side panel is positioned somewhere between the open and closed positions.

It is an object of the present invention to provide an openable side panel mechanism for load carrying vehicles which has a side panel openable and closable with a small force, has a reduced number of springs, and requires no heavy transverse beams which would support a side panel.

Another object of the present invention is to provide an openable side panel mechanism for load carrying vehicles which includes means for exerting adjustable forces tending to reduce the force with which a side panel can be opened and closed down to a desired level.

Still another object of the present invention is to provide an openable side panel mechanism for load carrying vehicles which is capable of stopping a side panel at any desired position anywhere between open and closed positions of the side panel.

According to the present invention, a compression coil spring is disposed in a spring enclosing cylindrical member which may comprise a portion of a frame assembly mounted on a bed of a load carrying vehicle or a portion of a side panel pivotably mounted on the frame assembly for angular movement between open and closed positions, the compression coil spring having one end secured to the spring enclosing cylindrical member. The side panel can be angularly moved between the open and closed positions with the aid of the resiliency of the compression coil spring. The other end of the compression coil spring is movable in the spring enclosing cylindrical member and operably connected through a guide plate to a link which is pivotably coupled to the frame assembly or the side panel. The secured end of the compression coil spring is adjustable in position with respect to the spring enclosing cylindrical member, so that the resilient force of the compression coil spring can be adjusted to permit the operator to open and close the side panel with a desired force. The compression coil spring is held in frictional engagement with the spring enclosing cylindrical member so as to be subjected to braking action such that the side panel can be stopped anywhere as desired between the open and closed positions.

The above and other objects, features and advantages of the present invention will become more apparent from the following description when taken in conjunction with the accompanying drawings in which preferred embodiments of the present invention are shown by way of illustrative example.

Brief Description of the Drawings

Fig. 1 is a fragmentary perspective view of a truck equipped with an openable side panel mechanism according to an embodiment of the present invention;

Fig. 2 is an enlarged fragmentary perspective view of the openable side panel mechanism depicted in an open position;

Fig. 3 is an enlarged fragmentary perspective view of the openable side panel mechanism depicted in a closed position;

Fig. 4 is an enlarged fragmentary vertical cross-sectional view of a post in the openable side panel mechanism;

Fig. 5 is a perspective view of a piston and a guide plate fitted therein;

Fig. 6 is a fragmentary perspective view of the post;

Fig. 7 is a fragmentary perspective view of a compression coil spring in the openable side panel mechanism;

Fig. 8 is a fragmentary perspective view of a truck equipped with an openable side panel mechanism according to another embodiment of the present invention;

Fig. 9 is an enlarged fragmentary perspective view of the openable side panel mechanism of Fig. 8 depicted in an open position;

Fig. 10 is an enlarged fragmentary perspective view of the openable side panel mechanism of Fig. 8 depicted in a closed position;

Fig. 11 is a fragmentary perspective view of a guide plate moving with respect to a frame member shown displaced from open to closed positions;

Fig. 12 is a fragmentary perspective view of a truck equipped with an openable side panel mechanism according to still another embodiment of the present invention;

Fig. 13 is an enlarged fragmentary perspective view of the openable side panel mechanism of Fig. 12 depicted in an open position;

Fig. 14 is an enlarged fragmentary perspective view of the openable side panel mechanism of Fig. 12 depicted in a closed position;

Fig. 15 is a fragmentary perspective view of an openable side panel mechanism according to a still further embodiment of the present invention, the openable side panel being in an open position; and

Fig. 16 is a fragmentary perspective view of the openable side panel mechanism of Fig. 15 depicted in a closed position.

Description of the Preferred Embodiments

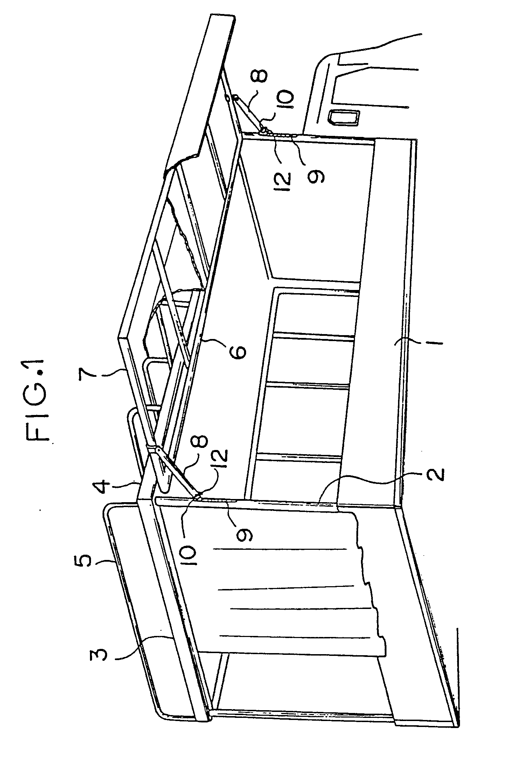

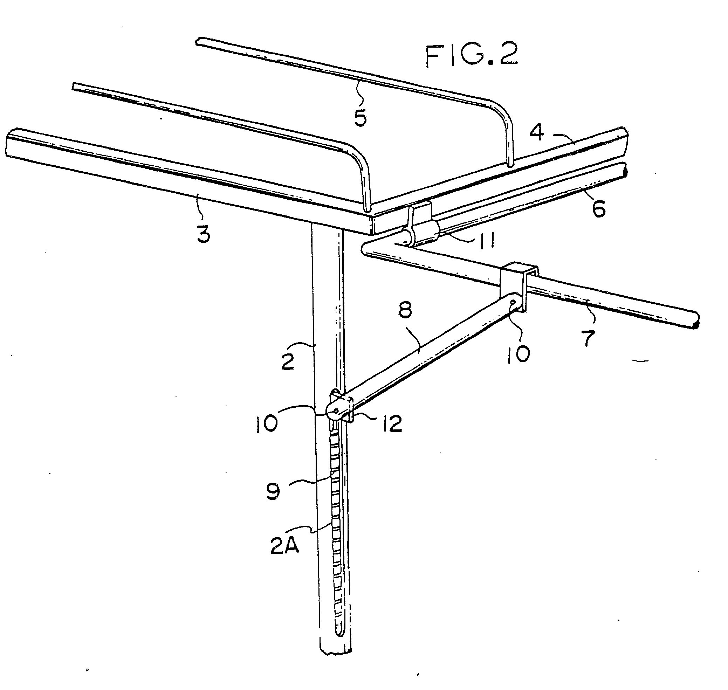

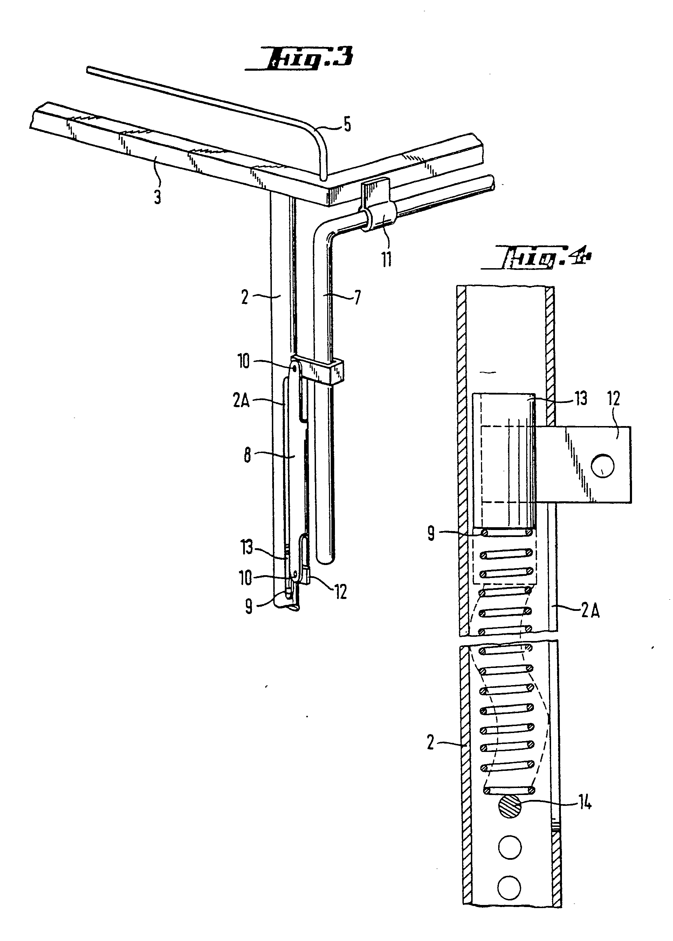

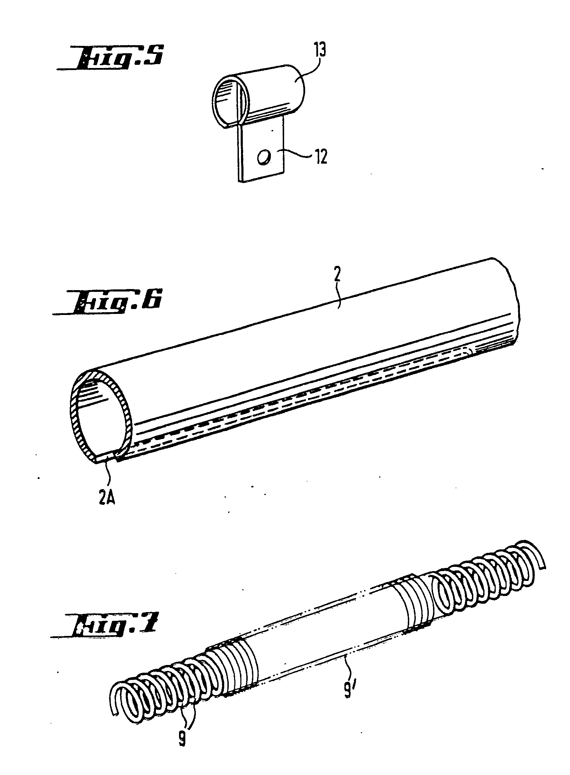

As shown in Fig. 1, a truck bed 1 supports thereon a plurality of upstanding posts 2 on which are mounted transverse and longitudinal beams 3, 4, the upstanding posts 2 and the beams 3, 4 jointly forming a frame assembly which includes a pair of inverted U-shaped spaced frames 5 vertically disposed respectively at front and rear positions on the truck bed 1. In Fig. 2, a side panel is composed of frame members 6, 7 in the form of cylindrical bodies or pipes, and the frame members 7 are pivotably joined by links 8 to guide plates 12 disposed at one end of compression coil springs 9 mounted in the posts 2, respectively, the links 8 being pivotably coupled to the frame members 7 and the guide plates 12 by means of pins 10. When the side panel is in an open position as shown in Fig. 2, the compression coil springs 9 are extended to push up the guide plates 12, causing the links 8 to lift the frame members 7. The frame member 6 is angularly movably supported on the longitudinal beam 4 by hinges or pipe collars 11, an arrangement which dispenses with large-size transverse beams as disclosed in Japanese Utility Model Publication JP—Y—54002496. When in a closed position as illustrated in Fig. 3, the guide plate 12 is displaced all the way down to the bottom end of a vertical longitudinal slot 2A defined in the post 2, while at the same time the link 8 is erected substantially vertically to close the side panel. In Fig. 4, the compression coil spring 9 placed in the post 2 has a lower end engaged by a knock pin 14 and an upper end engaged by a piston 13 coupled with the guide plate 12. The piston 13 has a cylindrical configuration complementarily fitted in the post 2, as shown in Fig. 5, and the guide plate 12 is slidably placed in the slot 2A in the post 2, as shown in Figs. 4 and 6.

The compression coil spring 9 has a nature that its coil diameter 9' varying with coil pitch as shown in Fig. 7. Due to its nature, when the coil spring is compressed and the coil pitch is shortened, a diameter 9' of the coil is outwardly and diametrically enlarged. The varying coil diameter of the compression coil spring 9 is effective to cause the compression coil spring 9 to slide frictionally along the inner wall of the post 2 so that the piston 13 can be stopped anywhere in its range of movement in the post 2. Therefore, the side panel can be stopped at any desired position between its open and closed positions. By manually pushing the frame member 7 upwardly, the frame member 7 can then be moved toward the open position under the manual upward force and the resiliency of the compression coil spring 9 which exceed the frictional force acting on and tending to stop the compression coil spring 9. Accordingly, the side panel can easily be opened manually with the aid of the compression coil spring 9. The compression coil spring 9 has a tendency to flex unevenly as shown by the broken line in Fig. 4 as it is compressed, and is pressed against the inner wall of the post 2, thus causing friction between the compression coil spring 9 and the inner wall of the post 2. This enables the piston 13 to be stopped at any desired position. The post 2 may have a plurality of holes in which the knock pin 14 can be selectively disposed. The force which is imposed by the compression coil spring 9 on the frame member 7 through the link 8 can be adjusted simply by changing the hole in which the knock pin 14 is received. After the side panel has been manually lowered to the closed position, the resilient force of the compression coil spring 9 which acts between the fulcrum constituted by the hinges or pipe collars 11 and the fulcrum constituted by the guide plates 12 is well counterbalanced by the weight of the side panel, which is therefore prevented from moving up.

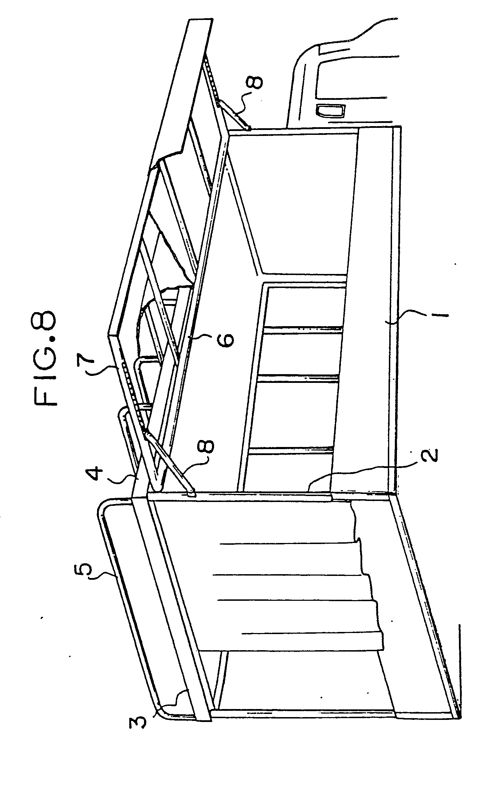

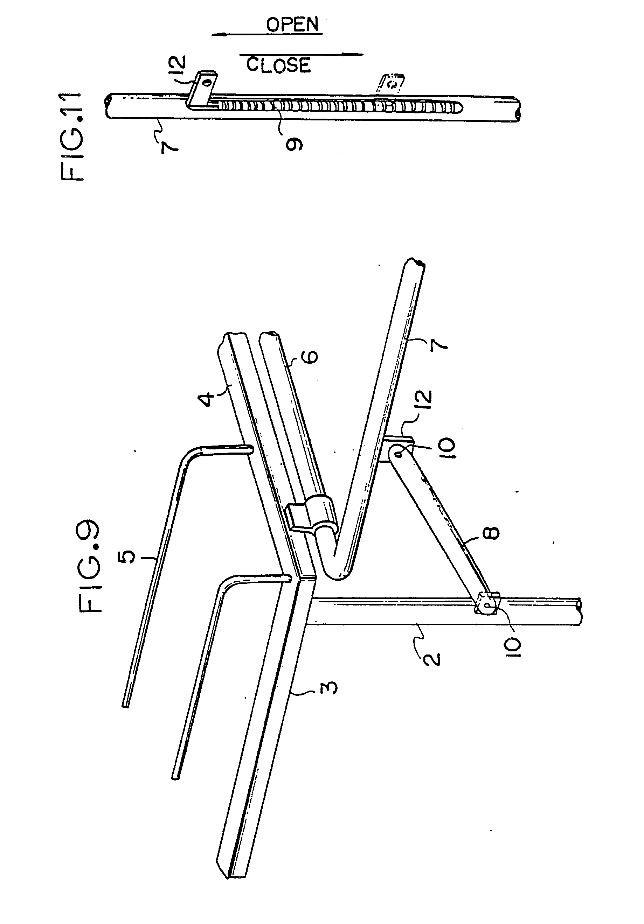

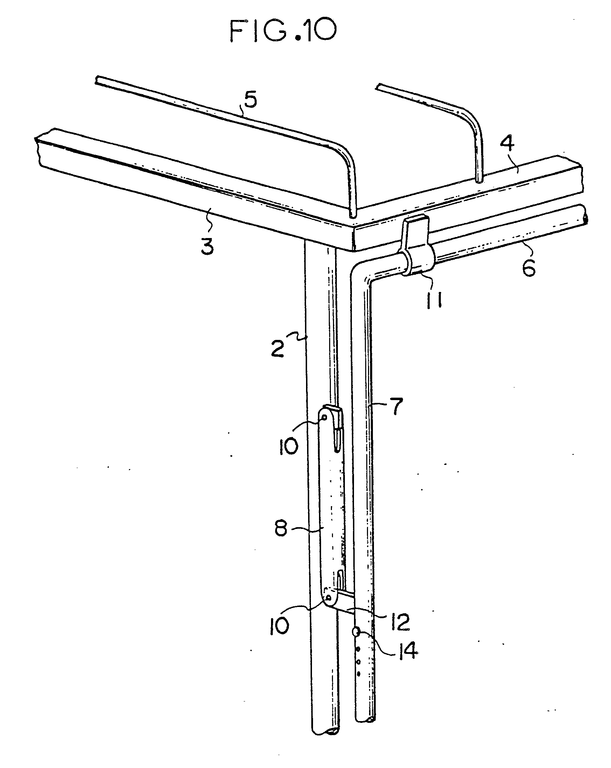

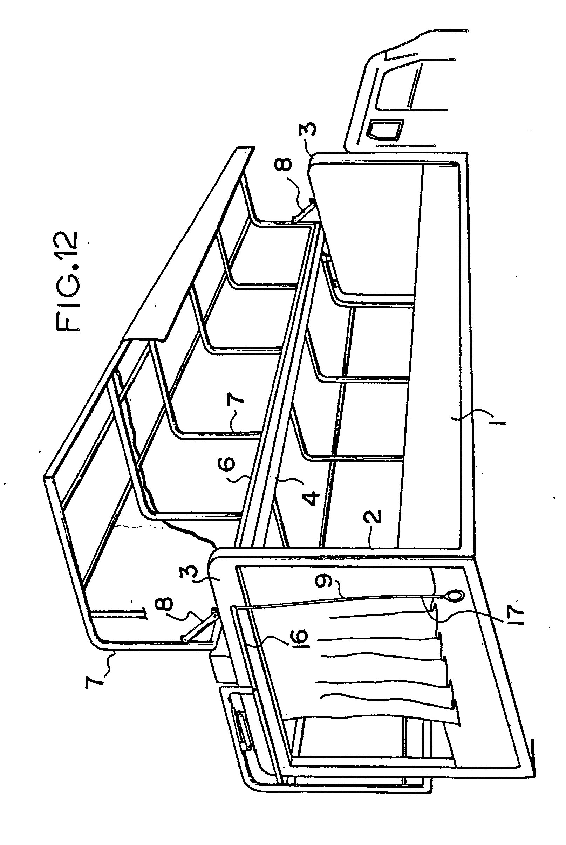

Fig. 8 shows an openable side panel mechanism according to another embodiment. With this embodiment, a compression coil spring 9 and an associated guide plate 12 are mounted in each frame member 7 of a side panel. The side panel is shown in Fig. 9 as being in its open position, and is shown in Fig. 10 as being in its closed position. As illustrated in Fig. 11, the guide plate 12 moves downwardly along the frame member 7 while the side panel of Fig. 8 is being displaced from its open to closed positions.

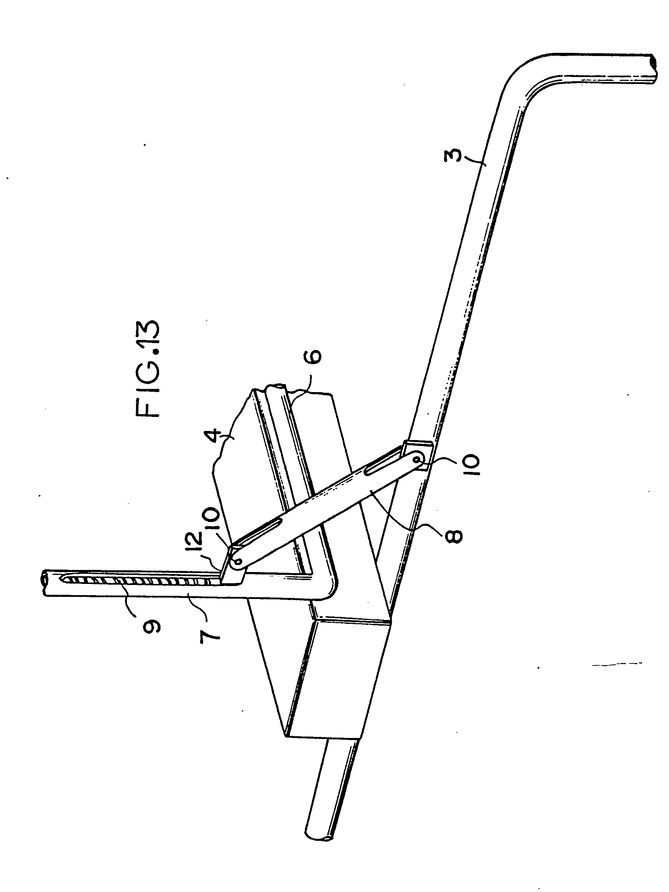

Fig. 12 is illustrative of an openable side panel mechanism according to still another embodiment. As shown in Fig. 13, a compression coil spring 9 is disposed in a frame member 7 of a roof and side panel of a generally L-shaped cross section, and a link 8 is pivotably connected by pins 10 between a transverse beam 3 and a guide plate 12 mounted on one end of the compression spring 9 and movable along the frame member 7. An actuator lever 16 is secured to the frame member 7 and has one end fastened to a control rope 17. When the control rope 17 is pulled down, or the frame member 7 is manually pushed upwardly, the roof and side panel can be angularly moved through substantially 90° from a closed position as shown in Fig. 14 to an open position as shown in Fig. 13. When in the closed position, the resilient force of the compression coil spring 9 is counterbalanced by the weight of the roof and side panel due to the positions in which the link 8 and the pins 10 are located, thus preventing the roof and side panel from opening up. By pulling the control rope 17 downwardly obliquely, the actuator lever 16 imposes an upward force on the frame member 7 and the link 8 is allowed to rise upwardly. The roof and side panel starts rising under the force from the coil spring 9 in compression and the force with which the control rope 17 is pulled. As the roof and side panel opens, the resilient force of the compression coil spring 9 becomes progressively smaller. However, the center of gravity of the roof and side panel is shifted toward the fulcrum about which the roof and side panel is angularly movable as the panel approaches the open position. Thus, the roof and side panel can be brought to the open position with a relatively small force and stably held in the open position which is angularly spaced by about 90° from the closed position.

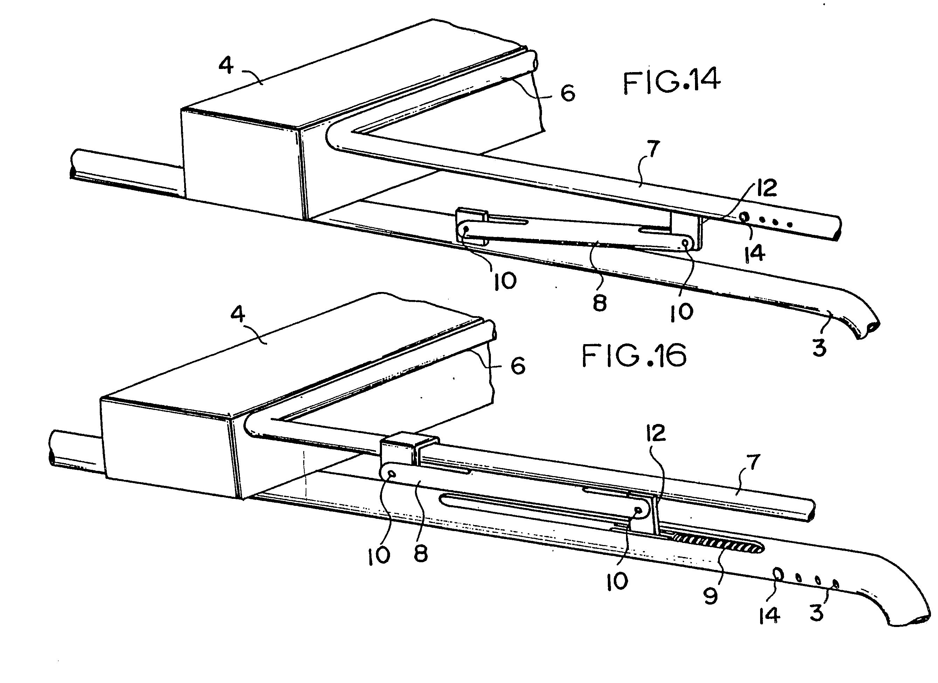

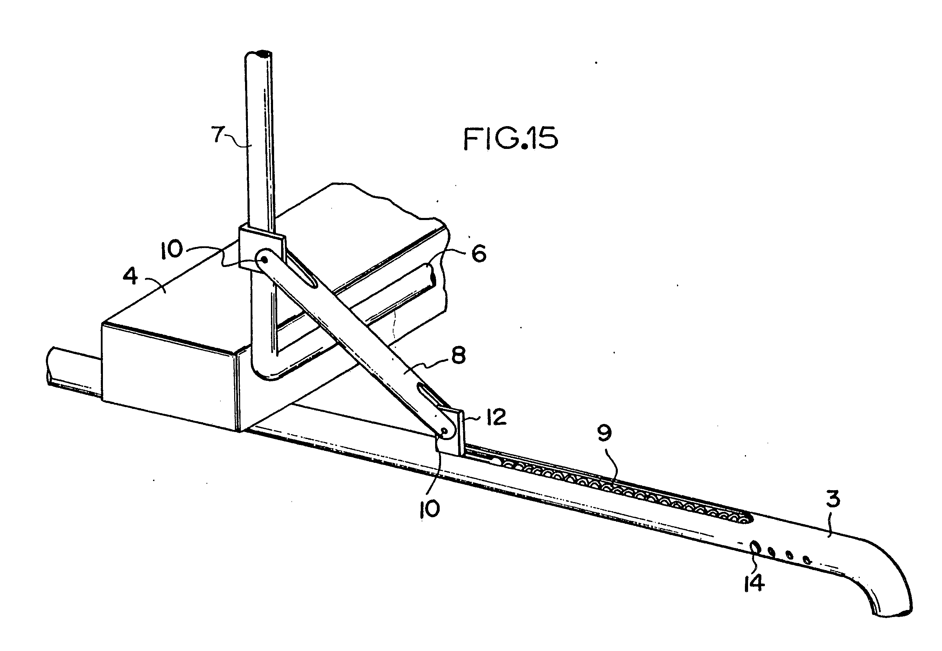

Figs. 15 and 16 illustrate a modification of the mechanism shown in Figs. 13 and 14. According to the modification of Figs. 15, 16, a compression coil spring 9 and a guide plate 12 are placed in a transverse beam 3.

With the arrangements of the present invention, the compression coil spring is disposed in a spring enclosing cylindrical member, and the side panel can be opened with a relatively small force under the resiliency of the compression coil spring, the spring enclosing cylindrical member being composed of the lateral beam or the frame member of the side panel. Since the spring is not exposed to view, the side panel mechanism is attractive in appearance and safe in operation. The number of springs which are required is reduced, the mechanism is simple and lightweight, and can be disassembled in kit-form for easy shipment and assembly.

The fixed end of the compression coil spring mounted in the spring enclosing cylindrical member is adjustable, and the resilient force of the compression coil spring acts on the frame member through the link mechanism including the guide plate mounted on the other end of the compression coil spring. This allows the side panel to be opened and closed with a small force. The resilient force of the compression coil spring can be adjusted by changing the fixed position thereof.

The compression coil spring is frictionally disposed in the spring enclosing cylindrical member so that the opening and closing motion and braking of the side panel can be controlled by the resiliency and friction of the compression coil spring. The side panel can be brought to a stop anywhere as desired between the open and closed positions.

Although certain preferred embodiments have been shown and described in detail, it should be understood that many changes and modifications may be made therein without departing from the scope of the appended claims.

## Claims

1. An opening side panel mechanism for a load carrying vehicle having a bed (1), a pair of spaced frames (2, 3) adapted to be mounted on said vehicle at ends of said bed, a beam (4) extending between and joined to said frames (2, 3), at least one side panel extending along and pivotably mounted on said beam (4) and movable between open and closed positions, each side panel including at least one frame member (6, 7) characterized by
a link (8) operatively connected between one of said frames (2, 3) and said frame member (7), one of said frames (2, 3) and said frame member (7) being provided with a spring enclosing cylindrical member, said spring enclosing cylindrical member having a longitudinal slot (2A), and being provided for receiving a compression coil spring therein, and
a compression coil spring (9) disposed in said spring enclosing cylindrical member and having one end fixed to said spring enclosing cylindrical member and the other end acting on said link (8) through said longitudinal slot (2A), said side panel being manually movable by aid of the resilient force of said compression coil spring (9).

2. A mechanism according to claim 1, characterized by a guide plate (12) mounted on said other end of said compression coil spring (9) and being movable in said longitudinal slot (2A) and being operatively coupled to said link (8).

3. A mechanism according to claim 1 or 2, wherein said one end of said compression coil spring (9) is adjustably fastened to said spring enclosing cylindrical member at a selected one of a plurality of different positions therein.

4. A mechanism according to claim 3, including a knock pin (14) by which said other end of said compression coil spring (9) is adjustably disposed with respect to said spring enclosing cylindrical member at said selected one of different positions.

5. A mechanism according to one of claims 1 to 4, wherein said compression coil spring (9) is frictionally movable in said spring enclosing cylindrical member.

6. A mechanism according to claim 5, wherein said compression coil spring (9) has a coil diameter which varies with respect to a coil pitch thereof.

7. A mechanism according to one of claims 1 to 6, wherein said one of said frames (2, 3) includes a portion serving as said spring enclosing cylindrical member.

8. A mechanism according to one of claims 1 to 6, wherein said frame member (6, 7) includes a portion serving as said spring enclosing cylindrical member.

9. A mechanism according to one of claims 1 to 8, including a hinge or pipe collar (11) fixed to said beam (4), said side panel being pivotably mounted on said pipe collar (11).

10. A mechanism according to one of claims 1 to 9, wherein said side panel is L-shaped in cross section so that said side panel can be stably held in said open position due to the position of its own center of gravity.

11. A mechanism according to one of claims 1 to 10, including an actuator lever (16) connected to said side panel, and a control rope (17) secured to said actuator lever (16), said side panel being angularly movable from said closed position toward said open position by manually operating said actuator lever (16) through said control rope (17).

**Patentansprüche**

1. Zu öffnender Seitenwandmechanismus für ein lasttransportierendes Fahrzeug mit einem Untergestell (1), einem Paar beabstandeter Rahmen (2, 3), die auf dem Fahrzeug an Enden des Untergestells montierbar sind, und mit einem Träger (4), der sich zwischen Rahmen (2, 3) erstreckt und mit diesen verbunden ist, wobei sich wenigstens eine Seitenwand längs des Trägers (4) erstreckt und schwenkbar an diesem befestigt ist und zwischen einer offenen und einer geschlossenen Stellung bewegbar ist, und wobei jede Seitenwand wenigstens ein Rahmenelement (6, 7) aufweist, gekennzeichnet durch

ein Verbindungsglied (8), das funktionell verbunden ist zwischen einem der Rahmen (2, 3) und den Rahmenelement (7), wobei von den Rahmen (2, 3) und dem Rahmenelement (7) einer mit einem eine Feder umschließende zylindrischen Element versehen ist, wobei das die Feder umschließende zylindrische Element einen Längsschlitz (2A) aufweist und zur Aufnahme einer Schraubendruckfeder vorgesehen ist, und durch eine Schraubendruckfeder (9), die in dem die Feder umschließenden zylindrischen Element angeordnet ist und deren eines Ende an dem die Feder umschließenden zylindrischen Element befestigt ist un deren anderes Ende auf das Verbindungsglied (8) duch den Längsschlitz (2A) wirkt, wobei die Seitenwand mit Hilfe der elastischen Kraft der Schraubendruckfeder (9) von Hand bewegbar ist.

2. Mechanismus nach Anspruch 1, gekennzeichnet durch eine FÜhrungsplatte (12), die an dem anderen Ende der Schraubendruckfeder (9) montiert und in dem Längsschlitz (2A) bewegbar ist und die funktionell mit dem Verbindungsglied (8) gekoppelt ist.

3. Mechanismus nach Anspruch 1 oder 2, dadurch gekennzeichnet, daß das eine Ende der Schraubendruckfeder (9) an dem die Feder umschließenden zylindrischen Element in diesem in einer aus einer Vielzahl unterschiedlicher Stellung ausgewählten Lage einstellbar befestigt ist.

4. Mechanismus nach Anspruch 3, gekennzeichnet durch einen Einsteckbolzen (14), durch den das andere Ende der Schraubendruckfeder (9) einstellbar bezüglich des die Feder umschließenden zylindrischen Elements an der aus den unterschiedlichen Stellungen ausgewählten Stellung angeordnet ist.

5. Mechanismus nach einem der Ansprüche 1 bis 4, dadurch gekennzeichnet, daß die Schraubendruckfeder (9) in dem die Feder umschließenden zylindrischen Element unter Reibung bewegbar ist.

6. Mechanismus nach Anspruch 5, dadurch gekennzeichnet, daß die Schraubendruckfeder (9) einer Windungsdurchmesser aufweist, der sich bezüglich deren Windungsweite ändert.

7. Mechanismus nach einem der Ansprüche 1 bis 6, dadurch gekennzeichnet, daß einer der Rahmen (2, 3) einen Abschnitt aufweist, der als die Feder umschließendes zylindrisches Element dient.

8. Mechanismus nach einem der Ansprüche 1 bis 6, dadurch gekennzeichnet, daß das Rahmenelement (6, 7) einen Abschnitt aufweist, der als die Feder umschließendes zylindrisches Element dient.

9. Mechanismus nach einem der Ansprüche 1 bis 8, gekennzeichnet durch ein Drehgelenk bzw. eine Rohrmuffe (11), die an dem Träger (4) befestigt ist, wobei die Seitenwand schwenkbar an der Rohrmuffe (11) montiert ist.

10. Mechanismus nach einem der Ansprüche 1 bis 9, dadurch gekennzeichnet, daß die Seitenwand einen L-förmigen Querschnitt in der Form aufweist, daß die Seitenwand in der offenen Stellung aufgrund der Lage ihres eigenen Schwerpunktes dauerhaft gehalten werden kann.

11. Mechanismus nach einem der Ansprüche 1 bis 10, gekennzeichnet durch einen Betätigungshebel (16), der mit der Seitenwand verbunden ist, und durch ein an dem Betätigungshebel (16) befestigtes Steuerseil (17), wobei die Seitenwand aus der geschlossenen Stellung in Richtung auf die offene Stellung durch manuelle Handhabung des Betätigungshebels (16) über das Steuerseil (17) im Winkel bewegbar ist.

**Revendications**

1. Mécanisme de panneaux latéraux ouvrants pour un véhicule de transport de charges comportant un plateau (1), eux cadres espacés (2, 3) conçus pour être montés sur le véhicule aux extrémités du plateau, une poutre (2) s'étendant entre lesdits cadres (2, 3) et étant raccordée à eux, au moins un panneau latéral s'étendant le long de la poutre (4) et pivotant sur elle et étant mobile entre des positions ouverte et fermée, chaque panneau latéral comportant au moins un élément (6, 7), de cadre, caractérisé par

une biellette (8) montée pour agir entre un des cadres (2, 3) et ledit élément (7) de cadre, un des cadres (2, 3) et l'élément (7) de cadre étant munis d'un organe cylindrique contenant un ressort, ledit élément cylindrique contenant un ressort possédant une fente longitudinale (2A) et étant prévu pour loger un ressort de compression à boudin, et

un ressort (9) de compression à boudin placé dans ledit organe cylindrique contenant un ressort et ayant une première extrémité fixée audit organe cylindrique contenant un ressort et l'autre extrémité agissant sur ladite bielle (8) à travers ladite fente longitudinale (2A), le panneau latéral étant déplaçable manuellement à l'aide de la force élastique du ressort (9) de compression à boudin.

2. Mécanisme selon la revendication 1, caractérisé par une plaque de guidage montée sur ladite autre extrémité du ressort (9) de compression à boudin et mobile dans la fente longitudinale (2A) et coopérant avec la bielle (8).

3. Mécanisme selon la revendication 1 ou 2, dans lequel ladite première extrémité du ressort (9) de compression à boudin est fixée de manière réglable sur l'organe cylindrique contenant un ressort dans une position choisie parmi une pluralité de positions différentes dans celui-ci.

4. Mécanisme selon la revendication 3, comportant un ergot de butée (14) au moyen duquel ladite autre extrémité du ressort (9) de compression à boudin est disposée de manière réglable par rapport à l'élément cylindrique contenant un ressort dans ladite position choisie. parmi différentes positions.

5. Mécanisme selon l'une des revendications 1 à 4, dans lequel le ressort (9) de compression à boudin est mobile par friction dans l'organe cylindrique contenant un ressort.

6. Mécanisme selon la revendication 5, dans lequel le ressort (9) de compression à boudin possède un diamètre d'hélice qui varie en fonction d'un pas d'enroulement de celui-ci.

7. Mécanisme selon l'une des revendications 1 à 6, dans lequel un des cadres (2, 3) précité comporte une partie qui sert d'élément cylindrique contenant un ressort.

8. Mécanisme selon l'une des revendications 1 à 6, dans lequel ledit élément (6, 7) de cadre comporte une partie qui sert d'élément cylindrique contenant un ressort.

9. Mécanisme selon l'une des revendications 1 à 8, comportant une charnière ou un collier tubulaire (11) fixé sur la poutre (4), ledit panneau latéral étant monté de façon à pouvoir pivoter sur le collier tubulaire (11).

10. Mécanisme selon l'une des revendications 1 à 9, dans lequel le panneau latéral possède en coupe transversale une forme en L de façon que ledit panneau latéral puisse être maintenu de manière stable dans ladite position ouverte du fait de la position de son propre centre de gravité.

11. Mécanisme selon l'une des revendications 1 à 10, comportant un levier de manoeuvre (16) relié au panneau latéral, et un câble de commande (17) fixé audit levier de manoeuvre (16), le panneau latéral étant déplaçable angulairement de ladite position fermée vers ladite position ouverte en actionnant manuellement le levier de manoeuvre (16) au moyen du câble de commande (17).

FIG.1

0 088 886

FIG.2

**Fig.3**

**Fig.4**

Fig.5

Fig.6

Fig.7

# FIG.8

0 088 886

FIG.9

FIG.11

OPEN

CLOSE

0 088 886

# FIG.10

FIG.12

FIG.13

FIG.14

FIG.16

FIG.15